Europäisches Patentamt

European Patent Office

Office européen des brevets

(19)

(11) Veröffentlichungsnummer: **0 213 427**
**B1**

(12)

# EUROPÄISCHE PATENTSCHRIFT

(45) Veröffentlichungstag der Patentschrift:
16.05.90

(21) Anmeldenummer: 86110760.5

(22) Anmeldetag: 04.08.86

(51) Int. Cl.⁵: **H02K 5/167**, H02K 15/16

(54) Verfahren zur Einstellung des Axialspiels zwischen dem Rotor und Stator eines Motors.

(30) Priorität: 16.08.85 DE 3529483
26.09.85 DE 3534382

(43) Veröffentlichungstag der Anmeldung:
11.03.87 Patentblatt 87/11

(45) Bekanntmachung des Hinweises auf die Patenterteilung:
16.05.90 Patentblatt 90/20

(84) Benannte Vertragsstaaten:
DE FR GB

(56) Entgegenhaltungen:
EP-A- 0 065 585
DE-A- 1 538 921
DE-A- 2 013 714
DE-U- 8 335 362
FR-A- 2 533 294
US-A- 3 165 816
US-A- 4 164 674

PATENTS ABSTRACTS OF JAPAN, Band 6,
Nr. 205 (E-136)[1083], 16th October 1982; &
JP-A-57 113 747 (NIPPON RADIATOR K.K.) 15-07-1982

(73) Patentinhaber: Siemens Aktiengesellschaft,
Wittelsbacherplatz 2, D-8000 München 2(DE)

(72) Erfinder: Blick, Klaus, Froschgrube 1,
D-8702 Rieden(DE)
Erfinder: Kleinhenz, Winfried, Flürleinstrasse 16,
D-8700 Würzburg(DE)
Erfinder: Schneider, Günter, Hauptstrasse 13,
D-8702 Oberpleichfeld(DE)
Erfinder: Glück, Wolfgang, Mozartstrasse 9,
D-8702 Bergtheim(DE)
Erfinder: Popp, Reinhold, Obere Dorfstrasse 82,
D-8716 Bibergau(DE)
Erfinder: Weller, Theodor, Würzburger Strasse 22,
D-8702 Güntersleben(DE)
Erfinder: Hildmann, Alfred, Bahnhofstrasse 2,
D-8714 Wiesentheid(DE)
Erfinder: Schnapp, Wolfgang, Gerbrunner Strasse 32,
D-8701 Randersacker(DE)

## Beschreibung

Die Erfindung bezieht sich auf ein Verfahren zur Einstellung des Axialspiels zwischen dem Rotor und dem Stator eines Motors gemäß Oberbegriff des Anspruchs 1; ein derartiges Verfahren ist durch das Europäische Patent 00 65 585 bekannt.

Bei dem bekannten Verfahren wird eine zwischen Rotorwelle und die Rotorwelle umgreifendem Kragen einer Isolierendscheibe in einer Wellenbohrung des Kragens radial beidseitig im Preßsitz vormagaziniert gehaltene Verschiebehülse zur Einstellung des Axialspiels von einer spielfreien Axiallage ausgehend um das Axialspielmaß weiter in die Wellenbohrung des Kragens eingedrückt. Es hat sich gezeigt, daß nur bei Einhaltung geringer Toleranzwerte für die zur Axialspieleinstellung gegeneinander zu verschiebenden Bauteile des Motorteils einerseits und der Verschiebehülse andererseits eine definierte Axialverschiebung der Verschiebehülse, insbesondere bei in einer Automatenfertigung dazu maschinell auf die Verschiebehülse aufgebrachtem Druck, möglich ist.

Es ist daher Aufgabe der vorliegenden Erfindung, auch bei für die Serienfertigung von Massenprodukten, z.B. der Herstellung von Kommutator-Kleinmotoren für Kfz-Lüfterantriebe, üblichen Toleranzwerten für die zusammenzumontierenden Bauteile eine genaue und betriebssichere Axialspiel-Einstellung gewährleisten zu können.

Die Lösung dieser Aufgabe gelingt bei einem Verfahren der eingangs genannten Art erfindungsgemäß durch die Lehre des Anspruchs 1; vorteilhafte Ausgestaltungen der Erfindung sind jeweils Gegenstand der Unteransprüche.

Durch das erfindungsgemäße Verfahren ist es möglich, bei der Einstellung des Axialspiels mit relativ geringem axialen Druck die Distanzhülse relativ zum aufnehmenden Motorteil auch um kleine definierte Einstellwege unabhängig von einem aufgrund streuender Toleranzwerte unterschiedlichen Preßdruck axial gegeneinander zu verschieben. Werden nach einer Ausgestaltung der Erfindung Distanzhülse und aufnehmendes Motorteil aus Kunststoff gefertigt und als Gleitflüssigkeit ein diffusionsklebendes Lösungsmittel, insbesondere in vorteilhafter Weise bei aus Polyamid hergestellten Motorteilen und Verschiebehülsen eine Resorcin-Lösung verwendet, so kann die Gleitflüssigkeit gleichzeitig dazu benutzt werden, die Distanzhülse nach dem Einstellen des Axialspiels in ihrer endgültigen Einstellposition relativ zum Motorteil zusätzlich zu sichern, da die durch die Gleitflüssigkeit angelösten gegenseitigen Gleitflächen von Motorteil und Distanzhülse anschließend gegeneinander verschweißt bzw. verklebt sind.

Um einerseits das Anlösen und damit das Gleiten der Verschiebehülse zu verbessern und andererseits nach der Einstellung das gegenseitige Verschweißen zu beschleunigen und damit den Rotor für den weiteren Montageablauf möglichst frühzeitig wieder freigeben zu können, ist nach einer weiteren Ausgestaltung der Erfindung vorgesehen, daß die mit Gleitflüssigkeit benetzten Teile vor und/oder nach Einstellung des Axialspiels einer Wärmebehandlung ausgesetzt werden.

Zwar ist bei herkömmlichen Verfahren (z.B. gemäß US-A-3 165 816 und FR-A-2 533 294) bekannt, die Lager einer elektrischen Maschine mittels einer selbsthärtenden plastischen Masse an die Lagerschilder zu befestigen und dabei auch die Zentrierung des Rotors auszuführen, jedoch ist es bei Axialspieleinstellungen nicht bekannt, eine Gleitflüssigkeit zu einem leichten Verschieben einer Distanzhülse zu benutzen.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

Fig. 1 einen axialen Längsschnitt durch einen ersten dauermagneterregten Kleinmotor,

Fig. 2 einen vergrößerten Detailausschnitt aus Fig.1 im Bereich des Kragens der rechten Isolierendscheibe vor der Einstellung des Axialspiels,

Fig. 3 den vergrößerten Detailausschnitt gemäß Fig.2 nach der Einstellung des Axialspiels und dem gegenseitigen Verschweißen bzw. Verkleben von Verschiebehülse einerseits und Kragen der Isolierendscheibe andererseits,

Fig. 4 einen axialen Längsschnitt durch einen weiteren dauermagneterregten Kleinmotor in einem ersten Vormontagezustand mit auf dem rechten Ende der Rotorwelle aufgeschobenen Zylinderlager vor der Einstellung des Axialspiels;

Fig. 5 die Anordnung nach Fig.4 mit zusätzlich am rechten Motorende montiertem Lagerschild vor der Einstellung des Axialspiels,

Fig. 6 die Anordnung gemäß Fig.5 nach der Einstellung des Axialspiels durch axiales Verschieben des rechten Zylinderlagers und nach dem Verschweißen mit der Lagerschildhülse,

Fig. 7 einen axialen Längsschnitt durch einen dritten dauermagneterregten Kleinmotor mit Kalottenlagerung vor der Einstellung des Axialspiels,

Fig. 8 die Anordnung nach Fig.7 nach der Einstellung des Axialspiels durch axiales Verschieben der Kalottenlagerung und nach dem Verschweißen der Kaloten-Lageraufnahme in der Lagerschildhülse.

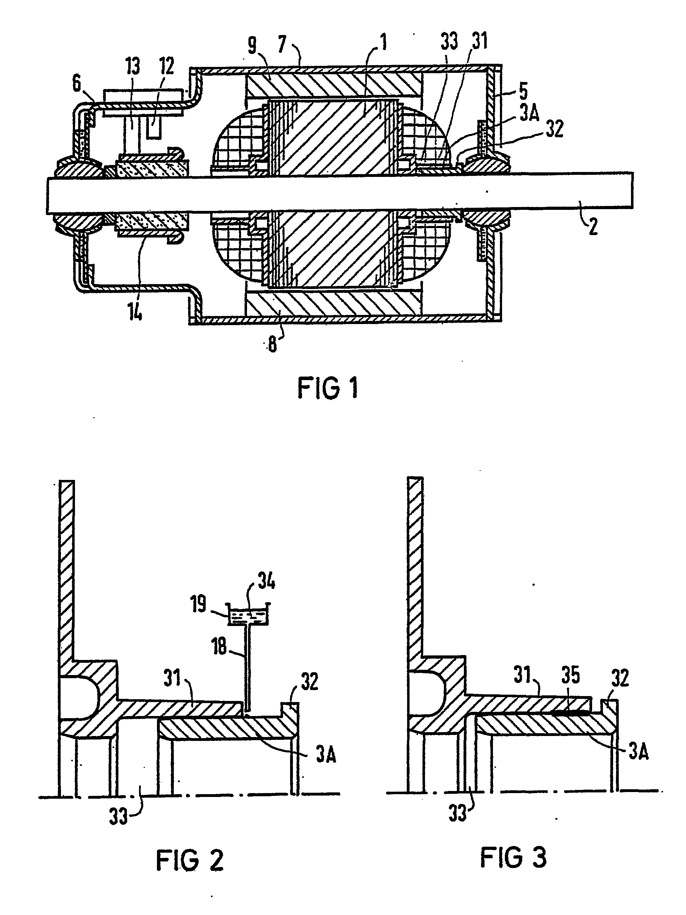

Fig.1 zeigt einen Dauermagnet-Kommutatormotor. An der Innenumfangsfläche des Statorgehäuses 7 sind das Magnetfeld erzeugende Dauermagnete 8,9 angeordnet. Stirnseitig sind am Statorgehäuse 7 Lagerbügel 4,5 befestigt. Die Lagerbügel 4,5 nehmen Kalottenlager auf, in denen eine Rotorwelle 2 drehbar gelagert ist. Auf die Rotorwelle 2 ist ein Rotorblechpaket 1, z.B. im Preßsitz gehalten. Auf dem linken Wellenende der Rotorwelle 2 ist innerhalb des Gehäuses ein Kommutator 14 aufgeklebt. Bürstenhalter 12,13 sind in hier nicht näher dargestellter Weise in einer statorgehäusefesten Bürstenbrücke gelagert und mit der äußeren Anschlußleitung verbunden. An die Lamellen des Kommutators 14 sind die Wicklungsenden der gewickelten Rotorwicklung angeschlossen, von der in Fig.1 die stirnseitigen Wickelköpfe dargestellt sind.

Zur elektrischen Isolierung der Wickelköpfe gegenüber den Stirnseiten des Rotorblechpaketes 1 und gegenüber der Rotorwelle 2 sind Kunststoff-Isolierendscheiben mit je einem axial angeformten und zumindest im Bereich der Wickelköpfe die Rotorwelle 2 übergreifenden Kragen vorgesehen. Die rechte Isolierendscheibe wird darüber hinaus nicht nur zur Isolierung der Wicklung gegenüber dem Rotorblechpaket 1 und der Rotorwelle 2 sondern auch zur Axialspieleinstellung mittels einer Verschiebehülse 3A mitbenutzt. Die Ausgestaltung der Isolierendscheibe und insbesondere des an diese Isolierendscheibe angeformten axialen Kragens 31 sowie der in diesem Kragen erfindungsgemäß gehalterten und nach der Einstellung fixierten Verschiebehülse 3A ist in den Detailausschnittbildern gemäß Fig.2 und Fig.3 deutlicher hergestellt. Zur Typenvereinheitlichung ist an der linken Seite des Rotorblechpaketes 1 der gleiche Typ einer Isolierendscheibe benutzt, obwohl hier eine Verschiebehülse im vorliegenden Fall nicht vorgesehen ist.

Der axial angeformte Kragen 31 der Isolierendscheibe weist eine zur Rotorwelle 2 konzentrische Ausnehmung 33 auf, in die die außen leicht konisch ansteigende Verschiebehülse 3A eingepreßt ist. Bei der Herstellung der Isolierendscheibe ist gleichzeitig die Verschiebehülse 3A mitgefertigt und bereits durch Einpressen bis zu einer bestimmten axialen Tiefe in die Ausnehmung 33 im Sinne eines einheitlichen, vormontierbaren Bauteils vorgefügt.

Zur Vergrößerung der Anlagefläche zwischen der Kalotte 4 und der Verschiebehülse 3A weist diese an ihrer der Kalotte zugewandten Stirnseite eine radial überkragende Schulter 32 auf. Beim Aufdrücken der Isolierendscheibe mit der vorgefügten Verschiebehülse 3A drückt das entsprechende Werkzeug gleichartig auf die Stirnseite der Isolierendscheibe als auch der Verschiebehülse 3A. Nach der Montage des Lagerbügels 5 kann ein eventuell zu geringes axiales Spiel durch bekannte, z.B. in der eingangs genannten Druckschrift beschriebene, Maßnahmen vergrößert werden.

Selbstverständlich ist vor der eigentlichen Axialspieleinstellung die Verschiebehülse 3A nur so weit in die Ausnehmung 33 des Kragens 31 einzuschieben, daß die verbleibende Einschubstrecke unter Berücksichtigung des gewünschen einzuhaltenden Axialspiels noch ein hinreichendes weiteres Einschieben in die Ausnehmung 33 des Kragens 31 der Isolierendscheibe ermöglicht.

Fig. 2 zeigt den Montagezustand unmittelbar vor der Einstellung des Axialspiels mit entsprechend weit aus dem Kragen 31 der Isolierendscheibe nach rechts herausgeschobenem, außen mit einer geringen in Achsrichtung ansteigenden Konizität versehenen Verschiebehülse 3A. Mittels einer Dosieranlage 18 wird eine Resorcin-Lösung als Gleitflüssigkeit 34 aus einem Vorratsbehälter 19 auf die Verschiebehülse 3A im Bereich der Gleitfläche zum Kragen 31 aufgeträufelt. Mittels eines hier nicht dargestellten Heißluftföhns oder einer UV-Wärmestrahlung kann das gegebenenfalls zusätzlich gewünschte Anlösen von Verschiebehülse 3A und Kragen 31 beschleunigt werden.

Durch diese Maßnahmen kann anschließend die gleichzeitig z.B. als Anlaufbuchse dienende Verschiebehülse 3A um das gewünschte definierte Maß zur Gewährleistung des erforderlichen Axialspiels in die Wellenbohrung 33 des Kragens 31 genau dosiert ohne Gefahr einer nur ruckweisen Bewegung aufgrund zu großer Trocken-Preßsitzreibung zwischen Verschiebehülse und Kragen bewegt werden.

Fig.3 zeigt den Montagezustand nach der Einstellung des Axialspiels, bei dem die Verschiebehülse 3A um das definierte Einstellmaß in den Kragen 31 der Isolierendscheibe eingedrückt ist. Im Wandungsbereich 35 sind Verschiebehülse 3A und Kragen 31 nach Verdunstung der Gleitflüssigkeit 34, gegebenenfalls wiederum durch Wärmeeinwirkung beschleunigt, miteinander verschweißt.

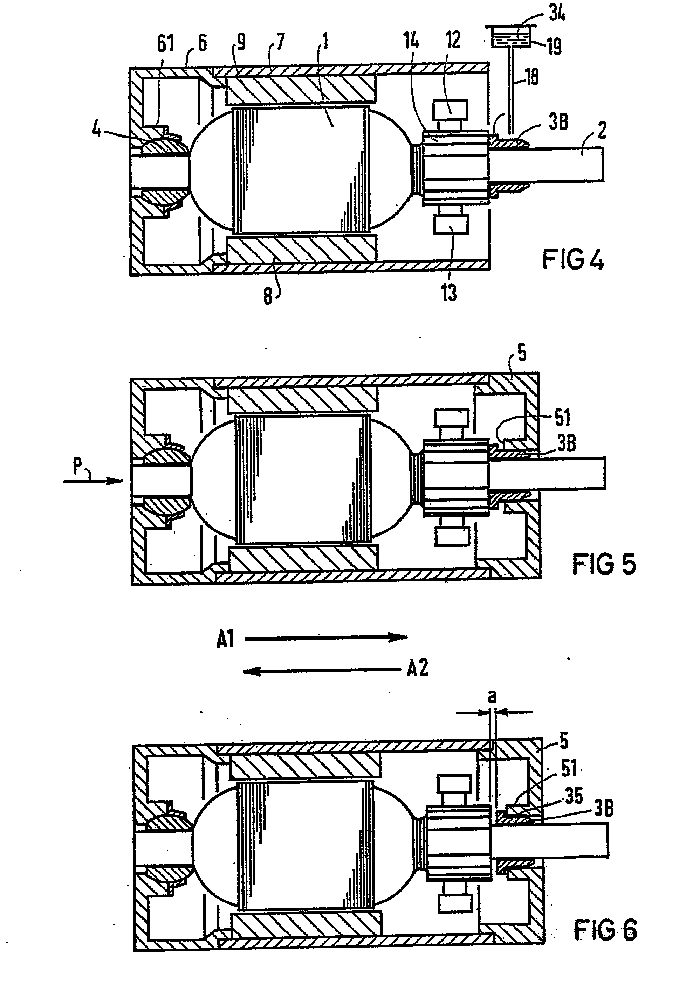

Die Figuren 4 bis 6 zeigen eine weitere Ausführung eines Dauermagnet-Kommutatormotors mit einer erfindungsgemäßen Gleitverschiebung und anschließenden Fixierung des verschobenen Einstellmittels mittels des Gleitmittels. An der Innenumfangsfläche des Statorgehäuses 7 sind wiederum das Magnetfeld erzeugende Dauermagnetschalen 8,9 angeordnet. Beim fertigmontierten Motor sind gemäß Fig.4,5 an beiden stirnseitigen Enden des Statorgehäuses 7 je ein Lagerbügel 5 bzw.6 befestigt. Der linke Lagerbügel 6 nimmt dabei in einer Lageraufnahme 61 ein übliches Kalottenlager 4 auf; im rechten Lagerbügel 5 ist in einer angeformten Kunststoff-Lagerhülse 51 ein Kunststoff-Zylinderlager 3B eingedrückt. In den Lagerbügeln 5,6 ist eine Rotorwelle 2 mit einem bewickelten Rotor-Blechpaket 1 und einem Kommutator 14 drehbar gelagert. Bürstenhalter 12,13 sind auch hier in nicht näher dargestellter Weise in einer statorgehäusefesten Bürstenbrücke schwenkbar gelagert und mit einer äußeren Anschlußleitung verbunden.

Fig.4 zeigt den Dauermagnet-Kommutatormotor in einem Vormontagezustand unmittelbar vor der Einstellung des Axialspiels; dazu ist auf der bereits im linken Lagerbügel 6 gelagerten Rotorwelle 2 von ihrem rechten noch freien Ende her das Zylinderlager 3B soweit aufgeschoben, bis es mit einem Anlaufbund gegen die rechte Stirnseite des Kommutators 14 anliegt; wie zuvor für das Beispiel gemäß Fig.2,3 beschrieben, wird nun über eine Dosieranlage 18 eine Gleitflüssigkeit 34 aus einem Vorratsbehälter 19 auf die Gleitfläche des Zylinderlagers 3B aufgeträufelt. Gemäß Fig.5 ist dann der rechte Lagerbügel 51 an das Statorgehäuse 7 anmontiert und dabei die Lagerhülse 51 des rechten Lagerbügels 5 im Preßsitz auf die Außengleitfläche des Zylinderlagers 3B im Sinne einer axial spielfreien Rotormontage aufgeschoben. Auch in diesem Montagezustand kann, z.B. durch eine Öffnung im Lagerbügel 5, Gleitflüssigkeit auf die Gleitfläche zwischen Zylinderlager 3B und Lagerhülse 51 aufgeträufelt werden.

Zur Einstellung des Axialspiels wird nun gemäß Fig.6 durch axialen Zusatzdruck auf das linke Ende der Rotorwelle 2 unter Überwindung des betriebsmäßigen Preßsitz-Druckes zwischen der Lagerhülse 51 und dem Zylinderlager 3B der gesamte Rotor um das vorgesehene Axialspiel a nach rechts in Richtung A1 gedrückt, wobei das Zylinderlager 3B um eben dieses Axialspielmaß a axial weiter in die Lagerhülse 51 eingedrückt wird. In Fig.6 ist der Rotor nach diesem Eindrücken des Zylinderlagers 3B in die Lagerhülse 51 wieder durch axiales Zurückbewegen in Richtung A2 in seiner Ausgangsstellung gemäß Fig.1 bzw. Fig.2 dargestellt, so daß zwischen der rechten Stirnseite des Kommutators 14 und der linken Stirnseite des Anlaufbundes des Zylinderlagers 3B das Axialspiel a gewährleistet ist.

Die vorbeschriebene erfindungsgemäße Einstellung des Axialspiels ist also dadurch gekennzeichnet, daß ausgehend von einer zunächst axialspielfreien gegenseitigen Montage von Stator und Rotor durch axiales Verschieben des Rotors das Zylinderlager 3B über eine fest mit der Rotorwelle 2 verbundene Abstützung, im vorliegenden Ausführungsbeispiel gemäß Fig.5 dem Kommutator 14, um das Maß des Axialspiels a in die Lagerhülse 51 weiter hineingeschoben wird.

Eine weitere vorteilhafte Einstellung des Axialspiels dadurch möglich, daß ausgehend von einer axialspielentsprechenden oder axialspielgrößeren gegenseitigen Montage von Stator und Rotor dieser aus einer zu dem Zylinderlager 3B gegenüberliegenden Kalottenlager 4 axialspiel-Anordnung um das Axialspielmaß a in Richtung A1 des Zylinderlagers 3B verschoben wird und dann das Zylinderlager 3B bis zur spielfreien Anlage gegen ein mit der Rotorwelle 2 fest verbundenes benachbartes Anlaufteil, im vorliegenden Ausführungsbeispiel gemäß Fig.6 dem Kommutator 14, in seiner Lagerhülse 51 axial vorgeschoben wird.

Im allgemeinen wird bei Montage des erfindungsgemäß aufgebauten Motors von einer senkrechten Montagerichtung ausgegangen, so daß sich z.B. die im letztgenannten Fall erläuterte axialspielsfreie Anordnung des Rotors an dem dem Zylinderlager 3B gegenüberliegenden Kalottenlager 4 selbsttätig ergibt, da sich die senkrechte Montage von dem als untere Auflage dienenden Lagerbügel 6 ausgehend in axialer Richtung aufbaut. Bei der senkrechten Montage kann die Gleitflüssigkeit auch in besonders einfacher Weise dann vom oberen axialen Ende des Zylinderlagers 3B aufgeträufelt werden.

Im Wandungsbereich 35 sind gemäß Fig.6 die Außenfläche des Zylinderlagers 3B und die Innenfläche der Lagerhülse 51 miteinander verschweißt.

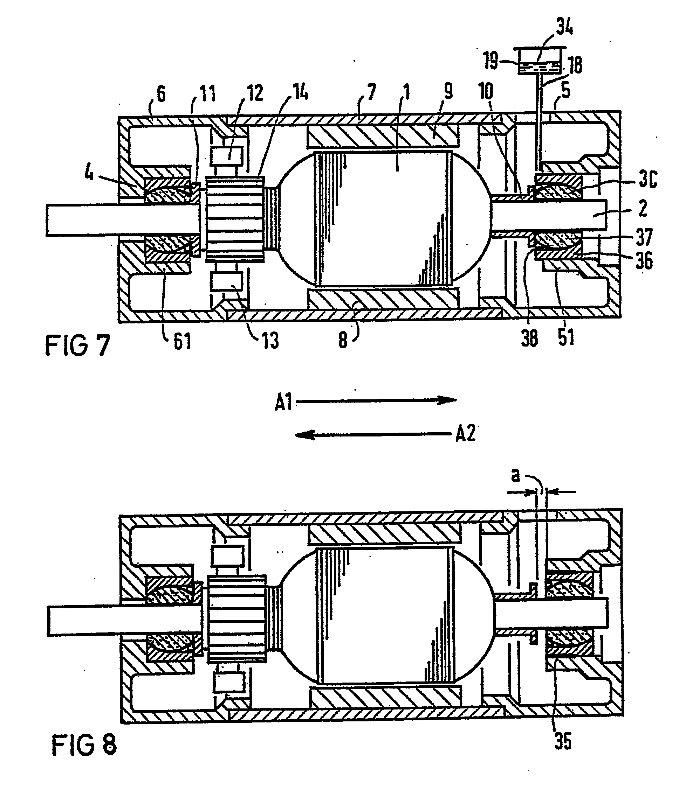

Fig.7 zeigt eine dritte Ausführung eines erfindungsgemäß mit einer fixierten Axialspieleinstellung versehenen Dauermagnet-Kommutatormotors. Sind der Innenumfangsfläche des Statorgehäuses 7 sind wiederum das Magnetfeld erzeugende Dauermagnetschalen 8,9 angeordnet. Stirnseitig sind am Statorgehäuse 7 Lagerbügel 5,6 befestigt. Die Lagerbügel 5,6 nehmen nunmehr Kalottenlagerungen 3C,4 auf, in denen eine Rotorwelle 2 drehbar gelagert ist. Auf der Rotorwelle 2 ist ein bewickeltes Rotor-Blechpaket 1 befestigt. Auf dem linken Wellenende der Rotorwelle 2 ist innerhalb des Statorgehäuses ein Kommutator 14 aufgeklebt. Bürstenhalter 12,13 sind in hier nicht näher dargestellter Weise statorgehäuseseitig gelagert und mit einer äußeren Anschlußleitung verbunden. An die Lamellen des Kommutators 14 ist die in die Nuten des Rotorblechpaketes 1 eingebrachte Rotorwicklung angeschlossen. Zwischen der linken Kalottenlagerung 4 und dem Kommutator 14 ist eine Anlaufscheibe 11 angeordnet, zwischen dem rechten Ende des Rotor-Blechpaketes 1 und der rechten Kalottenlagerung 3C ist auf der Rotorwelle 2 eine Distanzbuchse 10 mit einem Anlaufbund vorgesehen.

Während am linken Ende des in Fig.1,2 dargestellten Dauermagnet-Kommutatormotors die zur Lagerung der Rotorwelle 2 vorgesehene Kalottenlagerung 4 von Anfang an als Festlager in der Lageraufnahme des linken Lagerbügels 6 angeordnet ist, kann zur Einstellung eines definierten, die Toleranzen des jeweils zusammengebauten Motors berücksichtigenden Axialspiels die rechte Kalottenlagerung 3C in ihrer Kunststoff-Lagerhülse 51 des rechten Lagerbügels 5 aus der in Fig.1 dargestellten Lage mit einem Null-Axialspiel um die Wegstrecke des definierten Axialspiels an in die in Fig.2 dargestellte Axialspiellage nach axial rechts verschoben werden; dazu ist eine äußere Kunststoff Lageraufnahme 36 vorgesehen, die radial außen eine zylindrische, der Bohrung der Lagerhülse 51 entsprechende Umfangsfläche aufweist und radial innen und axial außen die Kalotte 37 mit einer pfannenförmigen Wölbung umfaßt, die axial innen durch eine an der eingedrückten Kalotte 37 anliegenden Klemmbrille 38 verschlossen wird. Zu Beginn der Montage des Dauermagnet-Kommutatormotors wird daher zweckmäßigerweise das in der Lagerhülse 51 im Gleit-Preßsitz gehaltene Kalottenlager 3C soweit nach links in Richtung A1 geschoben, daß nach dem Zusammenbau, jedoch vor der Einstellung des Axialspiels, ein spielfreier Sitz des Rotors relativ zum Stator gewährleistet ist. Durch ein axiales Vordrücken des Rotors in Richtung A2 auf das rechte Kalottenlager um das definierte Maß a des Axialspiels kann dann in einem einfachen Handhabungsvorgang ohne Notwendigkeit eines Vergleiches bzw. Messens des jeweiligen Ist- und Soll-Axialspiels die gewünschte Axialspieleinstellung vorgenommen werden.

Einerseits zur Gewährleistung eines ruckfreien Verschiebens der rechten Kalottenlagerung 3 in der Lagerhülse 51 bei der Einstellung des Axialspiels und andererseits zur anschließenden besonders guten Fixierung der Kalottenlagerung 3C in der Lagerhülse 51 nach der Einstellverschiebung ist auch hier nach der Erfindung vorgesehen, die Gleitfläche zwischen der Lageraufnahme 36 und der Lagerhülse 51 mit einer Gleitflüssigkeit 34 aus dem Vorratsbehälter über die Dosieranlage 18 zu beträufeln, die zunächst als Schmiermittel den Gleitvorgang begünstigt und anschließend die beiden Bauteile im Wandungsbereich 35 fest miteinander verbindet.

## Patentansprüche

1. Verfahren zur Einstellung des Axialspiels zwischen dem Rotor und dem Stator eines Motors mittels einer Distanzhülse, die betriebsmäßig in einem Motorteil lagefixiert angeordnet jedoch zur Einstellung des Axialspiels relativ zu dem Motorteil axial verschiebbar ist, **dadurch gekennzeichnet**, daß vor dem Axialverschieben der Distanzhülse zur Einstellung des Axialspiels die Gleitfläche zwischen dem Motorteil und der Distanzhülse mit einer Gleitflüssigkeit (34) benetzt wird.

2. Verfahren nach Anspruch 1, **gekennzeichnet** durch die Anwendung auf eine in eine zur Rotorwelle (2) konzentrische Ausnehmung (33) eines axial vorstehenden Kragens (31) einer Isolierendscheibe einschiebbare, zur Rotorwelle (2) und zum Kragen (31) im Preßsitz gehaltene Verschiebehülse (3A), deren Außengleitfläche zur Innenfläche der Ausnehmung (33) hin mit der Gleitflüssigkeit (34) benetzt wird.

3. Verfahren nach Anspruch 1, **gekennzeichnet**, durch die Anwendung auf ein in eine Largerhülse (51) einschiebbares, zur Largerhülse (51) im Preßsitz gehaltenes Zylinderlager, dessen Außengleitfläche zur Lagerhülse (51) hin mit der Gleitflüssigkeit (34) benetzt wird.

4. Verfahren nach Anspruch 1, **gekennzeichnet** durch die Anwendung auf eine in eine Largerhülse (51) einschiebbare, über ihre äußere Lageraufnahme (36) zur Lagerhülse (51) im Preßsitz gehaltene Kalottenlagerung (3C), deren Lageraufnahme-Außengleitfläche zur Lagerhülse (51) hin mit der Gleitflüssigkeit (34) benetzt ist.

5. Verfahren nach zumindest einem der Ansprüche 1 bis 4, **dadurch gekennzeichnet, daß** das Motorteil und die darin im Preßsitz gehaltene, zur Einstellung des Axialspiels axial verschiebbare Distanzhülse aus Kunststoff, insbesondere aus Thermoplast, gefertigt werden.

6. Verfahren nach Anspruch 5 mit einem Motorteil bzw. einer Distanzhülse aus Thermoplast, **dadurch gekennzeichnet, daß** als Gleitflüssigkeit (34) ein diffusionsklebefähiges Lösungsmittel verwendet wird.

7. Verfahren nach Anspruch 5 mit einem Motorteil bzw. einer Distanzhülse aus Polyamid, **dadurch gekennzeichnet, daß** als Gleitflüssigkeit (34) eine Resorcin-Lösung verwendet wird.

8. Verfahren nach Anspruch 7, **dadurch gekennzeichnet, daß** als Gleitflüssigkeit (34) eine Lösung aus 75 g Resorcin-Salz und 100 ml Spiritus verwendet wird.

9. Verfahren nach einem der Ansprüche 1 bis 8, **dadurch gekennzeichnet, daß** die mit Gleitflüssigkeit benetzten Teile von Kragen bzw. Verschiebehülse vor und/oder nach Einstellung des Axialspiels einer Wärmebehandlung ausgesetzt werden.

## Claims

1. Method for adjusting the axial play between the rotor and the stator of a motor by means of a spacer sleeve which is arranged in a fixed position in a motor part but can be axially displaced relative to the motor part in order to adjust the axial play, characterised in that before the spacer sleeve is axially displaced in order to adjust the axial play the sliding surface between the motor part and the spacer sleeve is moistened with a lubricant (34).

2. Method according to claim 1, characterised by the use of a sliding sleeve (3A) which can be inserted into a recess, concentric with the rotor shaft (2), of an axially projecting collar (31) of an insulating washer, which sliding sleeve is held in press fit to the rotor shaft (2) and the collar (31) and whose outer sliding surface towards the inner surface of the recess (33) is moistened with the lubricant (34).

3. Method according to claim 1, characterised by the use of a journal bearing which can be inserted into a bearing sleeve (51) and held in press fit to the bearing sleeve (51), and whose outer sliding surface towards the bearing sleeve (51) is moistened with the lubricant (34).

4. Method according to claim 1, characterised by the use of a spherical bearing arrangement (3C) which can be inserted into a bearing sleeve (51) and held in press fit via its outer bearing mounting (36) to the bearing sleeve (51) and whose bearing mounting – outer sliding surface towards the bearing sleeve (51) is moistened with the lubricant (34).

5. Method according to at least one of claims 1 to 4, characterised in that the motor part and the spacing sleeve held in press fit therein and axially displaceable for adjusting the axial play are manufactured from a synthetic material, in particular a thermoplastic.

6. Method according to claim 5, with a motor part and a spacer sleeve made from a thermoplastic, characterised in that a diffusible adhesive solvent is used as the lubricant (34).

7. Method according to claim 5 with a motor part and a spacer sleeve made from polyamide, characterised in that a resorcinol solvent is used as the lubricant (34).

8. Method according to claim 7, characterised in that a solvent of 75 g resorcinol salt and 100 ml alcohol is used as the lubricant (34).

9. Method according to one of claims 1 to 8, characterised in that the parts of the collar and the sliding sleeve which are moistened with a lubricant are exposed to heat treatment before and/or after adjustment of the axial play.

## Revendications

1. Procédé pour régler le jeu axial entre le rotor et le stator d'un moteur à l'aide d'une douille-entretoise, qui, en fonctionnement, est disposée d'une manière fixe en position dans une partie du moteur, mais est déplaçable axialement pour le réglage du jeu axial par rapport à cette partie du moteur, caractérisé par le fait qu'avant le déplacement axial de la douille-entretoise pour le réglage du jeu axial, on mouille la surface de glissement entre la partie du moteur et la douille-entretoise avec un liquide lubrifiant (34).

2. Procédé selon la revendication 1, caractérisé par l'utilisation d'une douille coulissante (3A), qui peut être insérée dans un évidement (33), concentrique à l'arbre (2) du rotor, d'un collet saillant axialement (31) d'un disque isolant, peut être maintenu montée selon un ajustement serré sur l'arbre (2) du rotor et dans le collet (31) et dont la surface extérieure de glissement est mouillée par le liquide lubrifiant (34), en direction de la surface intérieure de l'évidement (33).

3. Procédé suivant la revendication 1, caractérisé par l'utilisation d'un palier cylindrique, qui peut être inséré dans un coussinet de palier (51) et est maintenu selon un ajustement serré dans ce coussinet de palier (51) et dont la surface extérieure de glissement est mouillée par le liquide lubrifiant (34) en direction du coussinet de palier (51).

4. Procédé suivant la revendication 1, caractérisé par l'utilisation d'un palier à calotte sphérique (3C), qui peut être inséré dans un coussinet de palier (51) et est maintenu selon un ajustement serré dans ce coussinet de palier (51), par l'intermédiaire de son coussinet extérieur (36), la surface extérieure du coussinet de palier étant mouillée par le liquide lubrifiant (34) en direction du coussinet de palier (51).

5. Procédé suivant au moins l'une des revendications 1 à 4, caractérisé par le fait que la partie du moteur et la douille-entretoise maintenue selon un ajustement serré dans cette partie du moteur et déplaçable axialement pour le réglage du jeu axial, sont réalisées en une matière plastique, notamment une matière thermoplastique.

6. Procédé suivant la revendication 5, selon lequel la partie du moteur ou la douille-entretoise sont constituées par une matière thermoplastique, caractérisé par le fait qu'on utilise comme liquide lubrifiant (34), un solvant qui établi une adhérence par diffusion.

7. Procédé suivant la revendication 5, caractérisé par le fait qu'on utilise comme liquide lubrifiant (34), une solution de résorcine.

8. Procédé suivant la revendication 7, caractérisé par le fait qu'on utilise comme liquide lubrifiant (34) une solution contenant 75 g de sel de résorcine et 100 ml d'alcool.

9. Procédé suivant l'une des revendications 1 à 8, caractérisé par le fait qu'on soumet les parties, mouillées par le liquide lubrifiant, du collet ou de la douille coulissante à un traitement thermique avant et/ou après le réglage du jeu axial.

EP 0 213 427 B1

FIG 1

FIG 2

FIG 3

FIG 4

FIG 5

P

A1 ⟶

⟵ A2

a

FIG 6

FIG 7

A1 ⟶

⟵ A2

FIG 8